# EUROPEAN PATENT APPLICATION

(11) **EP 4 752 718 A1**
(43) Date of publication of application: **03.06.2026**
(21) Application number: 24857974.0
(22) Date of filing: 21.06.2024
(51) Int. Cl.: G06F 9/455

(54) **VIRTUAL MACHINE LIVE MIGRATION METHOD AND COMPUTING DEVICE**

(30) Priority: 30.08.2023 CN 202311104714
(71) Applicant: HUAWEI TECHNOLOGIES CO., LTD., Shenzhen 518129 (CN)
(72) Inventor: ZHENG, Chuan, Shenzhen, Guangdong 518129 (CN); YE, Zhenyu, Shenzhen, Guangdong 518129 (CN); XIE, Xiangyou, Shenzhen, Guangdong 518129 (CN)
(74) Representative: Pfenning, Meinig & Partner mbB
(86) International application number: PCT/CN2024/100593
(87) International publication number: WO 2025/044430

(57) **Abstract**

A live migration method for a virtual machine, and a computing device are disclosed. The method is applied to a host machine, and a virtual machine, a first handler, and a second handler are run in a processor of the host machine. The host machine stores write permission bits of a plurality of data pages of the virtual machine. A hardware set function for the write permission bits is set in the processor. A write permission bit of a first data page among the plurality of data pages is a first value indicating that the first data page is non-writable. The method includes: When the virtual machine performs a write operation on the first data page, the processor modifies the write permission bit of the first data page to a second value indicating that the first data page is writable. The second handler updates a dirty page bitmap of the virtual machine based on the write permission bit of the first data page. The first handler determines a dirty page of the virtual machine based on the dirty page bitmap, indicates the second handler to modify a write permission bit of the dirty page of the virtual machine to the first value, and migrates the dirty page of the virtual machine, where the dirty page of the virtual machine includes the first data page.

## Description

This application claims priority to Chinese Patent Application No. 202311104714.2, filed with the China National Intellectual Property Administration on August 30, 2023, and entitled "LIVE MIGRATION METHOD FOR VIRTUAL MACHINE, AND COMPUTING DEVICE", which is incorporated herein by reference in its entirety.

### TECHNICAL FIELD

This application relates to the field of computer technologies, and in particular, to a live migration method for a virtual machine, and a computing device.

### BACKGROUND

In the related technology, during live migration of a virtual machine on a computing device, a dirty page of the virtual machine is usually determined based on a change in a write permission bit of the virtual machine, and the dirty page is migrated. Specifically, each time a data page is migrated, a write permission bit of the data page is cleared. After the migration, when the virtual machine performs a write operation on the data page, because the virtual machine does not have a write permission on the data page, the virtual machine is trapped, and a kernel of the computing device resets the write permission bit of the data page.

In the foregoing solution, the virtual machine is trapped during the live migration, increasing performance loss of a host machine. During the live migration, if a large quantity of write operations are performed on the virtual machine, performance of the host machine is degraded more severely.

### SUMMARY

This application provides a live migration method for a virtual machine, and a computing device, to reduce a quantity of times that a virtual machine is trapped during live migration, and resolve a problem that performance of a host machine is degraded due to trapping of the virtual machine.

According to a first aspect, this application provides a live migration method for a virtual machine. The method may be applied to a host machine. The host machine includes a processor. A virtual machine, a first handler, and a second handler are run in the processor. The first handler is an application program that is run in an operating system and that is used to manage the virtual machine. The second handler is a program that is located in a kernel of the operating system and that is used to assist the first handler in managing the virtual machine.

The host machine stores write permission bits of a plurality of data pages of the virtual machine, and a hardware set function for the write permission bits is currently set in the processor. The plurality of data pages include a first data page. A write permission bit of the first data page is currently a first value. The first value indicates that the first data page is non-writable.

The method includes: When the virtual machine performs a write operation on the first data page, the processor modifies the write permission bit of the first data page to a second value, where the second value indicates that the first data page is writable. The second handler updates a dirty page bitmap of the virtual machine based on the write permission bit of the first data page. The first handler migrates a dirty page of the virtual machine based on the dirty page bitmap. The first handler may specifically determine the dirty page of the virtual machine based on the dirty page bitmap, indicate the second handler to modify a write permission bit of the dirty page of the virtual machine to a first value, and then migrate the dirty page of the virtual machine, where the dirty page of the virtual machine includes the first data page.

In the foregoing solution, during live migration of the virtual machine, when the virtual machine writes data to a data page, a write permission bit of the data page is set to writable (that is, a second value) through the hardware set function of the processor. This can avoid trapping of the virtual machine due to lack of a write permission on the data page, to resolve a problem that performance of the virtual machine is degraded due to trapping.

In a possible implementation of the first aspect, before the virtual machine performs the write operation on the first data page, the method further includes: The first handler enables the hardware set function. Specifically, the first handler may modify a flag, corresponding to the hardware set function, in a register of the processor to a value indicating that the hardware set function is enabled, so that the processor can perform the hardware set function.

In the foregoing solution, the first handler enables the hardware set function of the processor before the virtual machine performs a write operation on a data page, so that the processor can reset a write permission bit of the data page when the virtual machine performs the write operation.

In a possible implementation of the first aspect, before the processor modifies the write permission bit of the first data page to the second value, the method further includes: The processor determines a hardware set flag of the first data page. When the hardware set flag is a third value, the processor determines to modify the write permission bit of the first data page. The third value indicates that the processor is able to modify the write permission bit.

In a possible implementation of the first aspect, before the processor modifies the write permission bit of the first data page to the second value, the method further includes: The second handler modifies hardware set flags of the plurality of data pages to the third value.

In the foregoing solution, the processor may be controlled, based on a hardware set flag of a data page, to perform hardware set on the data page through the hardware set function.

In a possible implementation of the first aspect, before the virtual machine performs the write operation on the first data page, the method further includes: The second handler determines a hot data page and a cold data page among the plurality of data pages. The second handler modifies a hardware set flag of the hot data page of the virtual machine to the third value, and/or modifies a hardware set flag of the cold data page of the virtual machine to a fourth value, where the fourth value indicates that the processor is unable to modify a write permission bit, and the hot data page includes the first data page. The hot data page is a data page with frequent writing among the plurality of data pages, and the cold data page is a data page with infrequent writing among the plurality of data pages.

In the foregoing solution, the processor performs hardware set only on a write permission bit of the hot data page of the virtual machine. When updating the dirty page bitmap, the second handler needs to read a write permission bit of each data page from a memory. Therefore, when the processor performs hardware set only on the write permission bit of the hot data page, the second handler may read only the write permission bit of the hot data page, to reduce reading time of the second handler and improve migration efficiency.

In a possible implementation of the first aspect, the method further includes: When the virtual machine is trapped when performing a write operation on a second data page, the second handler modifies a write permission bit of the second data page to the second value, and updates the dirty page bitmap, where the cold data page includes the second data page.

In the foregoing solution, when hardware set is performed only on the write permission bit of the hot data page of the virtual machine, when the virtual machine performs a write operation on the cold data page, the virtual machine may be trapped, and the second handler modifies a write permission bit of the cold data page, so that the virtual machine can perform the write operation on the cold data page. Because the cold data page is accessed infrequently, a quantity of times of trapping caused by the cold data page is small, and impact on performance of the host machine is small.

In a possible implementation of the first aspect, that the second handler determines the hot data page and the cold data page among the plurality of data pages includes: The second handler updates activity of the plurality of data pages based on the dirty page bitmap. The second handler determines the hot data page and the cold data page based on the activity of the plurality of data pages.

In the foregoing solution, whether a data page is a hot data page may be determined based on activity of the data page.

In a possible implementation of the first aspect, that the second handler determines the hot data page and the cold data page based on the activity of the plurality of data pages includes: The second handler updates, based on the activity of the plurality of data pages, a hot page pool corresponding to the virtual machine, where the hot page pool is used to record the hot data page of the virtual machine. The second handler determines that a data page among the plurality of data pages other than the hot data page recorded in the hot page pool is the cold data page.

In a possible implementation of the first aspect, that the second handler updates the activity of the plurality of data pages based on the dirty page bitmap includes: determining, based on the dirty page bitmap, whether a target data page is a dirty page, where the plurality of data pages include the target data page; and when the target data page is a dirty page, if activity of the target data page is not maximum activity, modifying the activity of the target data page to the maximum activity, or if activity of the target data page is maximum activity, skipping modifying the activity of the target data page; or when the target data page is not a dirty page, if activity of the target data page is not minimum activity, reducing the activity of the target data page, or if activity of the target data page is minimum activity, skipping modifying the activity of the target data page.

In a possible implementation of the first aspect, that the second handler updates, based on the activity of the plurality of data pages, the hot page pool corresponding to the virtual machine includes: determining whether the hot page pool includes the target data page; and when the hot page pool does not include the target data page, if a quantity of hot data pages recorded in the hot page pool is less than a target threshold, adding the target data page to the hot page pool; or if a quantity of hot data pages recorded in the hot page pool is greater than or equal to a target threshold, deleting a third data page from the hot page pool, and adding the target data page to the hot page pool, where activity of the third data page is less than activity of a data page in the hot page pool other than the third data page.

In a possible implementation of the first aspect, before the second handler updates the dirty page bitmap of the virtual machine based on the write permission bit of the first data page, the method further includes: The second handler reads a page table entry of the first data page from the memory by using a hardware vector acceleration instruction, where the page table entry of the first data page includes the write permission bit of the first data page. The hardware acceleration instruction may include, for example, a NEON instruction that may read page table entries of eight data pages at a time, to increase a speed of reading a page table entry by the second handler.

According to a second aspect, this application provides a live migration apparatus for a virtual machine. The apparatus is used in a host machine. The host machine includes a processor. The host machine stores write permission bits of a plurality of data pages of the virtual machine. The plurality of data pages include a first data page. A write permission bit of the first data page is currently a first value. The first value indicates that the first data page is non-writable. The apparatus includes a first module, a second module, and a third module.

The first module is configured to: when the virtual machine performs a write operation on the first data page, modify the write permission bit of the first data page to a second value, where the second value indicates that the first data page is writable.

The second module is configured to update a dirty page bitmap of the virtual machine based on the write permission bit of the first data page.

The third module is configured to migrate a dirty page of the virtual machine based on the dirty page bitmap. The third module may specifically determine the dirty page of the virtual machine that is marked in the dirty page bitmap, indicate the second handler to modify a write permission bit of the dirty page of the virtual machine to the first value, and migrate the dirty page of the virtual machine, where the dirty page of the virtual machine includes the first data page.

In a possible implementation of the second aspect, before the virtual machine performs the write operation on the first data page, the third module is further configured to enable a hardware set function.

In a possible implementation of the second aspect, before modifying the write permission bit of the first data page to the second value, the first module is further configured to: determine a hardware set flag of the first data page; and when the hardware set flag is a third value, determine to modify the write permission bit of the first data page.

In a possible implementation of the second aspect, before modifying the write permission bit of the first data page to the second value, the second module is further configured to modify hardware set flags of the plurality of data pages to the third value.

In a possible implementation of the second aspect, before the virtual machine performs the write operation on the first data page, the second module is further configured to: determine a hot data page and a cold data page among the plurality of data pages; and modify a hardware set flag of the hot data page of the virtual machine to the third value, and modify a hardware set flag of the cold data page of the virtual machine to a fourth value, where the fourth value indicates that the processor is unable to modify a write permission bit, and the hot data page includes the first data page.

In a possible implementation of the second aspect, when the virtual machine is trapped when performing a write operation on a second data page, the second module is configured to modify a write permission bit of the second data page to the second value, and update the dirty page bitmap, where the cold data page includes the second data page.

In a possible implementation of the second aspect, the second module is configured to update activity of the plurality of data pages based on the dirty page bitmap, and determine the hot data page and the cold data page based on the activity of the plurality of data pages.

In a possible implementation of the second aspect, the second module is configured to: update, based on the activity of the plurality of data pages, a hot page pool corresponding to the virtual machine, where the hot page pool is used to record the hot data page of the virtual machine; and determine that a data page among the plurality of data pages other than the hot data page recorded in the hot page pool is the cold data page.

In a possible implementation of the second aspect, the second module is specifically configured to: determine, based on the dirty page bitmap, whether a target data page is a dirty page, where the plurality of data pages include the target data page; and when the target data page is a dirty page, if activity of the target data page is not maximum activity, modify the activity of the target data page to the maximum activity, or if activity of the target data page is maximum activity, skip modifying the activity of the target data page; or when the target data page is not a dirty page, if activity of the target data page is not minimum activity, reduce the activity of the target data page, or if activity of the target data page is minimum activity, skip modifying the activity of the target data page.

In a possible implementation of the second aspect, the second module is specifically configured to: determine whether the hot page pool includes the target data page; and when the hot page pool does not include the target data page, if a quantity of hot data pages recorded in the hot page pool is less than a target threshold, add the target data page to the hot page pool; or if a quantity of hot data pages recorded in the hot page pool is greater than or equal to a target threshold, delete a third data page from the hot page pool, and add the target data page to the hot page pool, where activity of the third data page is less than activity of a data page in the hot page pool other than the third data page.

In a possible implementation of the second aspect, before updating the dirty page bitmap of the virtual machine based on the write permission bit of the first data page, the second module is specifically configured to read a page table entry of the first data page from the memory by using a hardware vector acceleration instruction, where the page table entry of the first data page includes the write permission bit of the first data page.

According to a third aspect, this application provides a server. The server includes a processor and a memory. The processor is configured to execute a computer program stored in the memory to implement the live migration method for a virtual machine according to any one of the first aspect or the possible implementations of the first aspect.

According to a fourth aspect, this application provides a computing device. The computing device includes a processor and a memory. The processor is configured to execute a computer program stored in the memory to implement the live migration method for a virtual machine according to any one of the first aspect or the possible implementations of the first aspect.

According to a fifth aspect, this application provides a computer-readable storage medium. The computer-readable storage medium stores instructions. When the instructions are run on a computer, the computer is enabled to perform the live migration method for a virtual machine according to any one of the first aspect or the possible implementations of the first aspect.

According to a sixth aspect, this application provides a computer program product including instructions. When the computer program product runs on a computer, the computer is enabled to perform the live migration method for a virtual machine according to any one of the first aspect or the possible implementations of the first aspect.

Any one of the foregoing apparatus, computing device, computer storage medium, or computer program product is configured to perform the method provided in the foregoing descriptions. Therefore, for beneficial effects that can be achieved by the apparatus, the computing device, the computer storage medium, or the computer program product, refer to beneficial effects of a corresponding solution in the corresponding method provided in the foregoing descriptions. Details are not described herein again.

### BRIEF DESCRIPTION OF DRAWINGS

FIG. 1 is a diagram of a software structure of a host machine according to an embodiment of this application;
FIG. 2 is a flowchart of a virtual machine migration method according to an embodiment of this application;
FIG. 3 is a diagram of a structure of asynchronously modifying a write permission bit by a processor and a KVM according to an embodiment of this application;
FIG. 4 is a flowchart of another virtual machine migration method according to an embodiment of this application;
FIG. 5 is a flowchart of determining activity of a data page by a KVM in another virtual machine migration method according to an embodiment of this application;
FIG. 6 is a flowchart of determining a cold data page and a hot data page by a KVM based on activity of a data page in another virtual machine migration method according to an embodiment of this application;
FIG. 7 is a flowchart of another virtual machine migration method according to an embodiment of this application;
FIG. 8 is a diagram of a structure of a virtual machine migration apparatus according to an embodiment of this application; and
FIG. 9 is a diagram of a structure of a computing device according to an embodiment of this application.

### DESCRIPTION OF EMBODIMENTS

To make the objectives, technical solutions, and advantages of embodiments of this application clearer, the following describes the technical solutions in embodiments of this application with reference to the accompanying drawings.

In the descriptions of embodiments of this application, the term "example", "for example", "in an example", or the like is used to give an example, an illustration, or a description. Any embodiment or design scheme described with "example", "for example", or "in an example" in embodiments of this application should not be construed as being more preferred or more advantageous than another embodiment or design scheme. To be precise, the term "example", "for example", "in an example", or the like is intended to present a related concept in a specific manner.

In the descriptions of embodiments of this application, the term "and/or" describes only an association relationship between associated objects, and indicates that three relationships may exist. For example, A and/or B may indicate the following three cases: Only A exists, only B exists, and both A and B exist. In addition, the term "a plurality of " means two or more, unless otherwise specified. For example, a plurality of systems are two or more systems, and a plurality of screen terminals are two or more screen terminals.

In addition, the terms "first" and "second" are merely intended for description, and shall not be understood as an indication or implication of relative importance or an implicit indication of an indicated technical feature. Therefore, a feature limited by "first" or "second" may explicitly or implicitly include one or more features. The terms "include", "comprise", "have", and their variants all mean "including but not limited to", unless otherwise specifically emphasized in another manner.

Before embodiments of this application are described, the following first describes terms in embodiments of this application.

A host machine (host machine, HOST) is a server on which a virtual machine is run in a virtualization technology.

A virtual machine (virtual machine, VM, or GUEST) is a virtual computer system that is simulated by using software and that has a complete hardware system function and runs in an isolated environment of a host machine.

A data page is a storage unit for storing service data of a virtual machine in a memory of a host machine. Data pages may be classified into a hot data page and a cold data page. The hot data page is a data page with frequent writing among a plurality of data pages, and the cold data page is a data page with infrequent writing among the plurality of data pages.

A page table entry is a data structure for recording information of a data page, where the information includes a physical address, a write permission bit, a hardware set flag, and the like of the data page.

Live migration of a virtual machine is a process of migrating the virtual machine when the virtual machine is in a running state. In other words, the virtual machine continues to provide a service for a user without shutdown during the live migration. The migration is specifically migrating a data page corresponding to the virtual machine from a host machine on which the virtual machine is located to another host machine.

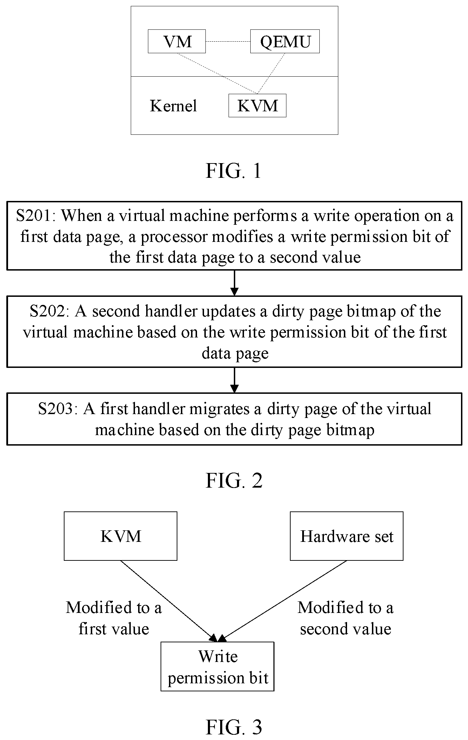

FIG. 1 is a diagram of a software structure of a host machine according to an embodiment of this application. As shown in FIG. 1, the host machine includes a quick emulator (quick emulator, QEMU) running in a processor, a kernel-based virtual machine (kernel-based virtual machine, KVM), and a virtual machine (virtual machine, VM). The KVM is located in a kernel of the host machine. The host machine may include a computing device like a server, a desktop computer, or a notebook computer. This is not specifically limited in this embodiment of this application.

During operation and maintenance of the host machine, to avoid impact on a service running in the virtual machine VM, live migration needs to be performed on the virtual machine. During migration of the virtual machine, the virtual machine does not stop running, and the virtual machine still provides a service for a user. Specifically, the live migration of the virtual machine may be applied to the following scenarios: hardware upgrading of the host machine, software upgrading of the host machine (for example, updating the kernel and/or the QEMU of the host machine), maintenance and load balancing of the host machine, and/or the like.

The virtual machine includes a plurality of data pages. During running of the virtual machine, the plurality of data pages are loaded to a memory of the host machine. Usually, the live migration of the virtual machine is usually performed through iterative migration, and only a data page modified at current time (that is, a dirty page) is migrated during each iteration. All of the plurality of data pages of the virtual machine are dirty pages during a 1^{st} iteration. In other words, all data pages of the virtual machine are migrated during the 1^{st} iteration.

In a live migration method for the virtual machine, whether a data page is a dirty page is determined based on a change status of a write permission bit of the data page. Specifically, the memory of the host machine stores a page table of the virtual machine, the page table includes a page table entry corresponding to each data page, and each page table entry records a write permission bit of a corresponding data page. The KVM maintains, based on a write permission bit corresponding to each data page, a dirty page bitmap corresponding to the virtual machine. During each iteration, the QEMU obtains the dirty page bitmap from the KVM, determines a current dirty page of the virtual machine based on the dirty page bitmap, indicates the KVM to clear a write permission bit of the current dirty page of the virtual machine, and migrates the dirty page. After the write permission bit of the data page is cleared, the virtual machine cannot perform a write operation on the data page. When the virtual machine performs a write operation on the data page, because the virtual machine does not have a write permission on the data page, the virtual machine is trapped, and indicates the KVM to reset the write permission bit of the data page. After the KVM resets the write permission bit of the data page, the virtual machine can perform a write operation on the data page. In this way, the KVM can determine, based on a change in the write permission bit of the data page, whether the data page is a dirty page, to update the dirty page bitmap.

In this method, the QEMU indicates the KVM to clear the write permission bit of the data page, leading to trapping of the virtual machine. Trapping of the virtual machine leads to service loss of the virtual machine and performance deterioration of the host machine during the live migration. When the virtual machine frequently performs writing on the data page, service loss of the virtual machine and performance deterioration of the host machine are more severe. In some applications, a service of the virtual machine is sensitive to performance of the virtual machine and/or performance of the host machine. When service loss of the virtual machine occurs and/or performance of the host machine deteriorates, the live migration of the virtual machine is aborted, and consequently, the live migration cannot be continued.

In another live migration method for the virtual machine, a modified data page is recorded by a hardware module of the host machine. Specifically, when the virtual machine performs a write operation on a data page, the hardware module of the host machine records an address of the data page in a buffer pool of the hardware module. When the buffer pool is full, the hardware module triggers a trap, and the KVM updates the dirty page bitmap based on the data page recorded in the buffer pool, to be specific, marks the data page recorded in the buffer pool as a dirty page.

Compared with the foregoing method, in this method, because a write permission on the data page is not cleared, the host machine is not trapped when the virtual machine performs the write operation, so that a quantity of times of trapping of the host machine is reduced, to avoid service loss of the virtual machine and significant performance deterioration of the host machine. However, this method is applicable only to a host machine with a capability of the hardware module, and is inapplicable to a host machine without a capability of the hardware module. In addition, in this method, although the quantity of times of trapping of the host machine is reduced, the host machine may still be trapped, leading to performance deterioration of the host machine.

In view of this, an embodiment of this application provides a live migration method for a virtual machine, to resolve the foregoing problem.

In the live migration method for a virtual machine provided in this embodiment of this application, each time a write permission bit of a data page is cleared, the data page of the virtual machine is set through a hardware set function of a processor in a host machine. After the hardware set function of the processor is enabled, when the virtual machine performs a write operation on a data page and a write permission bit of the data page indicates that the data page is non-writable, the write permission bit of the data page may be reset, to enable the write permission bit of the data page to indicate that the data page is writable. This can avoid trapping of the virtual machine due to inability to perform a write operation on a data page, to avoid service loss of the virtual machine due to trapping and performance deterioration of the host machine due to trapping.

FIG. 2 is a flowchart of a live migration method for a virtual machine according to an embodiment of this application. The method may be applied to the host machine shown in FIG. 1, and is jointly performed by a first handler and a second handler that are run in a processor of the host machine. As shown in FIG. 2, the method may include S201 to S203. The steps shown in FIG. 2 indicate one iterative migration during live migration of the virtual machine. When performing live migration on the virtual machine, the first handler and the second handler may perform a plurality of iterations according to the steps shown in FIG. 2 until a migration task for the virtual machine is completed.

The following describes in detail the steps shown in FIG. 2 by using an example in which the first handler is a QEMU in the host machine and the second handler is a KVM in the host machine.

S201: When the virtual machine performs a write operation on a first data page, the processor modifies a write permission bit of the first data page to a second value, where the second value indicates that the data page is writable.

In this embodiment, when determining to perform live migration on the virtual machine, the QEMU may enable a hardware set function of the processor, and indicate the KVM to start dirty page tracking. Specifically, the QEMU may modify a flag, in a register in the processor, that indicates whether the hardware set function is enabled or disabled to a value indicating that the hardware set function is enabled.

In this embodiment, a memory of the host machine stores page table entries of a plurality of data pages of the virtual machine, and each page table entry records a write permission bit of a corresponding data page. As shown in FIG. 3, after receiving, from the QEMU, a notification indicating to start dirty page tracking, the KVM modifies a write permission bit of each data page of the virtual machine to a first value, and creates a dirty page bitmap of the virtual machine, where the first value indicates that the data page is non-writable. Specifically, a page table entry of each data page is read from the memory based on a logical address of each data page, a value of a write permission bit in the page table entry of each data page is modified to the first value, and then a modified page table entry is written into the memory.

In the foregoing case, when the virtual machine performs the write operation on the first data page among the plurality of data pages, as shown in FIG. 3, the processor may modify the write permission bit of the first data page to the second value, so that the virtual machine can write data to the first data page, to avoid trapping of the host machine due to inability of the virtual machine to write data to the first data page. Specifically, when modifying the write permission bit of the first data page, the processor may read a hardware set flag of the first data page from the memory, and determine, based on a value of the hardware set flag, whether the write permission bit can be modified. A hardware set flag of a data page may be stored in a page table entry of the data page. The processor may read the page table entry of the data page from the memory, and obtain a value of the hardware set flag of the data page from the page table entry. For example, the value of the hardware set flag may include a third value or a fourth value, where the third value indicates that a write permission bit can be modified, and the fourth value indicates that a write permission bit cannot be modified.

In this embodiment, a value of a hardware set flag of each data page may be set to the third value by default. In another embodiment, a value of a hardware set flag of each data page may be set to the fourth value by default. When live migration starts, the QEMU may indicate the KVM to modify the value of the hardware set flag of each data page to the third value, so that the processor can modify a write permission bit of the data page.

S202: The second handler updates the dirty page bitmap of the virtual machine based on the write permission bit of the first data page.

In this step, the KVM may read write permission bits of the plurality of data pages of the virtual machine from the memory based on a preset time interval, and when the write permission bit of the first data page among the plurality of data pages is the second value, mark the first data page as a dirty page in the dirty page bitmap. The dirty page bitmap may be stored in the memory. During each update of the dirty page bitmap, the KVM may read the dirty page bitmap from the memory, update the dirty page bitmap, and store the dirty page bitmap in the memory after the dirty page bitmap is updated.

The KVM may read the page table entries of the plurality of data pages from the memory at a time through a hardware vector acceleration instruction. For example, a NEON instruction is a 4-channel 128-bit hardware instruction (including a total of 512 bits, namely, 64 bytes). When each page table entry includes 8 bytes, the KVM may read eight page table entries from the memory at a time through the NEON instruction. The hardware vector acceleration instruction may include a virtual address of a to-be-read data page. The KVM may send the hardware vector acceleration instruction to a memory controller, to obtain a page table entry of the data page that is returned by the memory controller. It can be understood that, when modifying a hardware set flag of a data page, the KVM may also increase a speed of reading a page table entry through the hardware vector acceleration instruction.

S203: The first handler migrates a dirty page of the virtual machine based on the dirty page bitmap.

In this step, the QEMU may obtain the dirty page bitmap from the memory, determine the dirty page of the virtual machine based on a flag of each data page in the dirty page bitmap, and then send a clear message to the KVM, to indicate the KVM to clear a write permission bit of the dirty page. The clear message may include a logical address of the dirty page. The KVM may read a page table entry of the dirty page from the memory based on the logical address in the clear message, modify a value of the write permission bit in the page table entry of the dirty page to the first value, and then write a modified page table entry into the memory.

In this step, after indicating the KVM to modify a write permission on the dirty page, the QEMU may send the dirty page of the virtual machine to a migrate-to device of the virtual machine, to implement migration of the dirty page.

In this embodiment, the QEMU may iteratively perform S203, and when a quantity of dirty pages of the virtual machine is less than or equal to a preset value, stop running the virtual machine, send a remaining dirty page of the virtual machine to the migrate-to device, and then end the migration task for the virtual machine.

In the method provided in the embodiment shown in FIG. 2, during the live migration of the virtual machine, after a write permission on a data page is cleared, a write permission bit of the data page is reset through the hardware set function of the processor, so that the virtual machine can write data to the data page without being trapped, to avoid service loss of the virtual machine due to trapping, and avoid performance deterioration of the host machine due to trapping. In addition, because service loss of the virtual machine is avoided, a failure of live migration of the virtual machine due to service loss can be further avoided in the method.

In the method provided in the embodiment shown in FIG. 2, because the processor resets a write permission bit of a data page, when updating the dirty page bitmap, the KVM needs to read a page table entry of each data page from the memory and determine a value of the write permission bit of each data page, to determine a modified data page of the virtual machine, in other words, determine the dirty page of the virtual machine. In this process, when the virtual machine has a large quantity of data pages, it takes a long time for the KVM to update the dirty page bitmap, increasing live migration time of the virtual machine and reducing live migration efficiency of the virtual machine.

In view of this, an embodiment of this application further provides another live migration method for a virtual machine, to resolve a problem that live migration efficiency decreases because it takes a long time for a KVM to update a dirty page bitmap.

In the another live migration method for a virtual machine provided in this embodiment of this application, during live migration, the KVM determines a hot data page and a cold data page of the virtual machine, and modifies a hardware set flag of the cold data page to a fourth value, so that a processor cannot modify a write permission bit of the cold data page. In this case, the virtual machine is trapped when performing a write operation on the cold data page, and the KVM resets the write permission bit of the cold data page to a second value. After resetting the write permission bit of the cold data page, the KVM may directly update a flag, corresponding to the cold data page, in a dirty page bitmap, and mark the cold data page as a dirty page. Compared with a case in which the KVM marks the cold data page as a dirty page by reading a page table entry of the cold data page from a memory, in this case, time taken by the KVM to mark the cold data page as a dirty page is shortened, to shorten time taken by the KVM to update the dirty page bitmap and improve live migration efficiency.

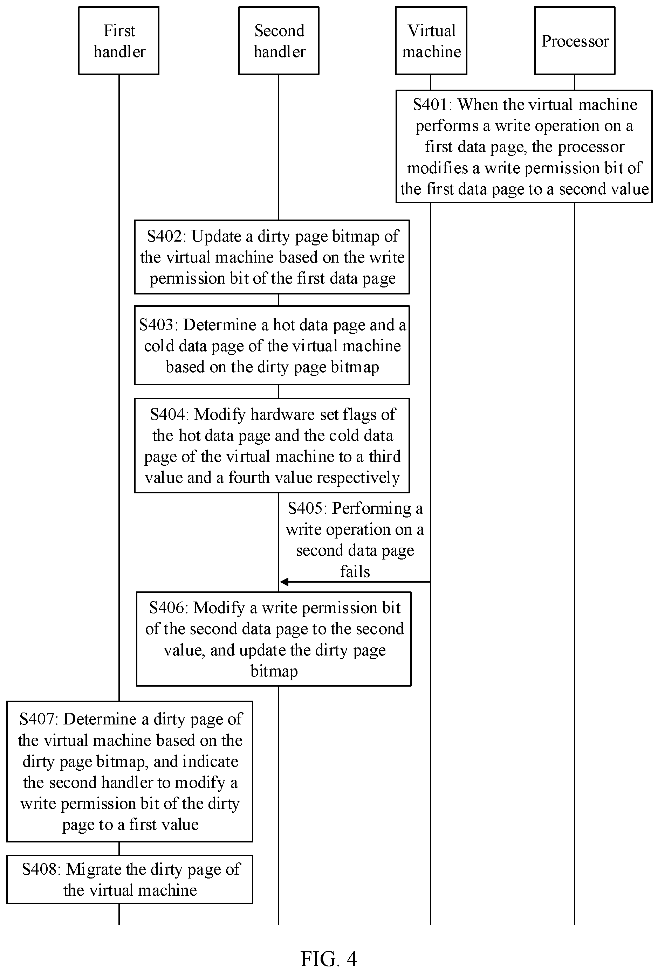

FIG. 4 is a flowchart of another live migration method for a virtual machine according to an embodiment of this application. Similarly, the method may be applied to the host machine shown in FIG. 1, and is jointly performed by a first handler and a second handler that are run in a processor of the host machine. As shown in FIG. 4, the method may include S401 to S408. The steps shown in FIG. 4 indicate one iterative migration during live migration of the virtual machine. When performing live migration on the virtual machine, the first handler and the second handler may perform a plurality of iterations according to the steps shown in FIG. 4 until a migration task for the virtual machine is completed.

The following describes in detail the steps shown in FIG. 4 by using an example in which the first handler is a QEMU in the host machine and the second handler is a KVM in the host machine.

S401: When the virtual machine performs a write operation on a first data page, the processor modifies a write permission bit of the first data page to a second value, where the second value indicates that the data page is writable.

S402: The second handler updates a dirty page bitmap of the virtual machine based on the write permission bit of the first data page.

In this embodiment, for specific descriptions of S401 and S402, refer to the descriptions of S201 and S202 in the embodiment shown in FIG. 2 respectively. Details are not described herein again.

S403: The second handler determines a hot data page and a cold data page of the virtual machine based on the dirty page bitmap.

In this step, after updating the dirty page bitmap, the KVM may update activity of a plurality of data pages based on the dirty page bitmap, and then update, based on the activity of the plurality of data pages, a hot page pool corresponding to the virtual machine. The hot page pool is used to record the hot data page of the virtual machine.

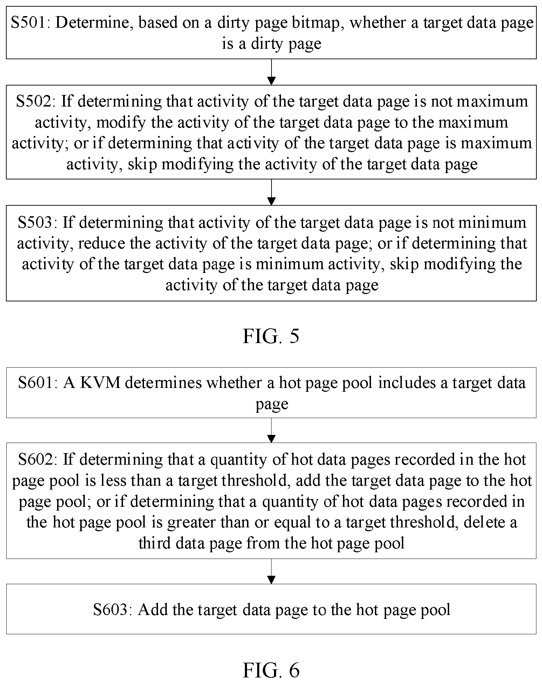

A process of updating activity of a data page by the KVM is described below with reference to FIG. 5. Details are not described herein.

Updating, by the KVM, the hot page pool corresponding to the virtual machine is described below with reference to FIG. 6. Details are not described herein.

S404: The second handler modifies a hardware set flag of the hot data page of the virtual machine to a third value, and modifies a hardware set flag of the cold data page of the virtual machine to a fourth value. The third value indicates that the processor is able to modify a write permission bit, and the fourth value indicates that the processor is unable to modify a write permission bit. It can be understood that the first data page mentioned in S401 is the hot data page of the virtual machine.

S405: The virtual machine is trapped when performing a write operation on the cold data page, and the second handler is indicated to reset a write permission bit of the cold data page.

In this step, for example, the cold data page is a second data page. Because the processor cannot reset a write permission bit of the second data page to the second value, the virtual machine is trapped when writing data to the second data page, and the KVM is indicated to reset the write permission bit of the second data page to the second value.

S406: The second handler modifies the write permission bit of the cold data page to the second value, and updates the dirty page bitmap.

In this step, when determining that the virtual machine is trapped when performing the write operation on the second data page, the KVM modifies the write permission bit of the cold data page to the second value. Then the virtual machine writes data to the cold data page. After modifying the write permission bit of the cold data page to the second value, the KVM may update the dirty page bitmap, to be specific, mark the cold data page as a dirty page in the dirty page bitmap. It should be noted that, when marking the cold data page as a dirty page in the dirty page bitmap, the KVM may repeatedly perform steps S403 and S404, to re-determine a hot data page and a cold data page, and modify hardware set flags of the hot data page and the cold data page.

S407: The first handler determines a dirty page of the virtual machine based on the dirty page bitmap, and indicates the second handler to modify a write permission bit of the dirty page of the virtual machine to a first value.

S408: The first handler migrates the dirty page of the virtual machine.

In this embodiment, for specific descriptions of S407 and S408, refer to the descriptions of S203 in the embodiment shown in FIG. 2. Details are not described herein again.

FIG. 5 is a flowchart of updating, by a KVM, activity of a data page based on a dirty page bitmap according to an embodiment of this application. As shown in FIG. 5, the process includes S501 to S503. Specifically, the KVM may pre-divide activity of the data page into N values, where the values are different. For example, the activity may be divided into 0 to 9, where 0 indicates minimum activity, and 9 indicates maximum activity. Each time after the KVM updates the dirty page bitmap, the KVM may update activity of each data page according to the steps shown in FIG. 5. The steps shown in FIG. 5 are described below.

S501: The KVM determines, based on the dirty page bitmap, whether a target data page is a dirty page.

The target data page is a data page of a virtual machine. When the target data page is marked as a dirty page in the dirty page bitmap, S502 is performed. When the target data page is not marked as a dirty page in the dirty page bitmap, S503 is performed.

S502: If determining that activity of the target data page is not the maximum activity, the KVM modifies the activity of the target data page to the maximum activity; or if determining that activity of the target data page is the maximum activity, the KVM skips modifying the activity of the target data page. For example, when the activity of the target data page is 2, the activity of the target data page is modified to the maximum activity 9. It should be noted that, before live migration starts, activity of each data page is initially the minimum activity 0.

S503: If determining that activity of the target data page is not the minimum activity, the KVM reduces the activity of the target data page; or if determining that activity of the target data page is the minimum activity, the KVM skips modifying the activity of the target data page. Reducing the activity of the target data page includes: when the activity of the target data page is 9, modifying the activity of the target data page to 8, and so on.

FIG. 6 is a flowchart of updating, by a KVM based on activity of a data page, a hot page pool corresponding to a virtual machine according to an embodiment of this application. As shown in FIG. 6, the process includes S601 to S603.

S601: The KVM determines whether the hot page pool includes a target data page. When the hot page pool does not include the target data page, S602 is performed. When the hot page pool includes the target data page, S603 is performed.

S602: If determining that a quantity of hot data pages recorded in the hot page pool is less than a target threshold, the KVM adds the target data page to the hot page pool; or if determining that a quantity of hot data pages recorded in the hot page pool is greater than or equal to a target threshold, the KVM deletes a third data page from the hot page pool. Activity of the third data page is less than activity of a data page in the hot page pool other than the third data page. In other words, the third data page is a data page, recorded in the hot page pool, that has minimum activity.

S603: The KVM adds the target data page to the hot page pool.

Based on the embodiment shown in FIG. 4, an embodiment of this application further provides another live migration method for a virtual machine.

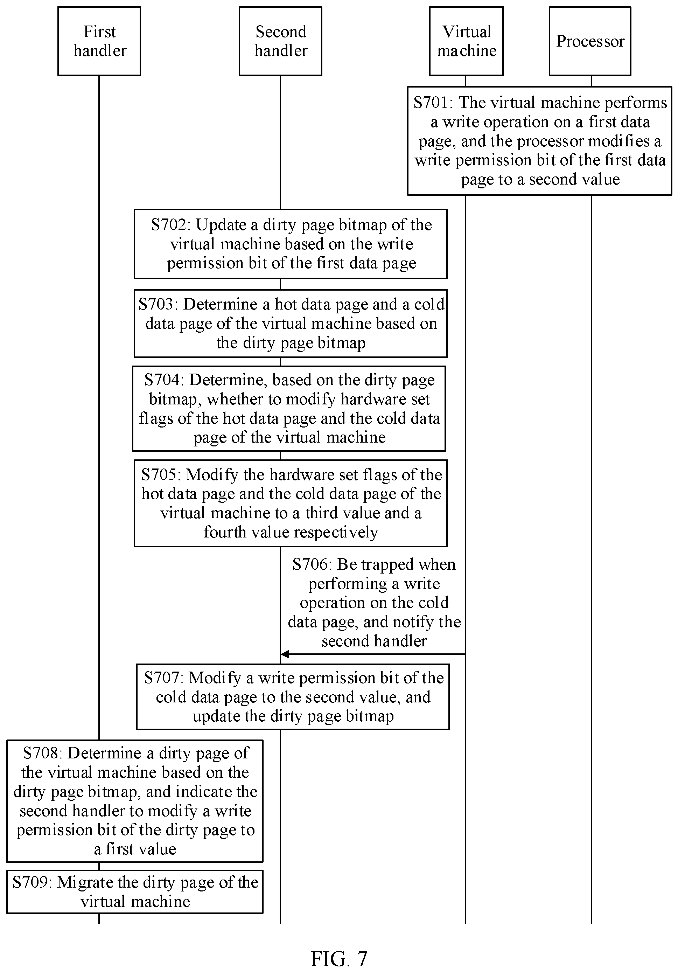

FIG. 7 is a flowchart of another live migration method for a virtual machine according to an embodiment of this application. Similarly, the method may be applied to the host machine shown in FIG. 1, and is jointly performed by a first handler and a second handler that are run in a processor of the host machine. As shown in FIG. 7, the method may include S701 to S709. The steps shown in FIG. 7 indicate one iterative migration during live migration of the virtual machine. When performing live migration on the virtual machine, the first handler and the second handler may perform a plurality of iterations according to the steps shown in FIG. 7 until a migration task for the virtual machine is completed.

The following describes in detail the steps shown in FIG. 7 by using an example in which the first handler is a QEMU in the host machine and the second handler is a KVM in the host machine.

S701: When the virtual machine performs a write operation on a first data page, the processor modifies a write permission bit of the first data page to a second value, where the second value indicates that the data page is writable.

S702: The second handler updates a dirty page bitmap of the virtual machine based on the write permission bit of the first data page.

S703: The second handler determines a hot data page and a cold data page of the virtual machine based on the dirty page bitmap.

In this embodiment, for specific descriptions of S701 to S703, refer to the descriptions of S401 to S403 in the embodiment shown in FIG. 4 respectively. Details are not described herein again.

S704: The second handler determines, based on the dirty page bitmap, whether to modify hardware set flags of the hot data page and the cold data page of the virtual machine.

In this step, the KVM may determine a quantity of dirty pages based on the dirty page bitmap, obtain a current total capacity of dirty pages based on the quantity and a size of a single dirty page, and then determine, based on the current total capacity of dirty pages and current network bandwidth of the host machine, whether to modify the hardware set flags of the hot data page and the cold data page of the virtual machine. For example, when the total capacity of dirty pages is less than or equal to the network bandwidth, the hardware set flags of the hot data page and the cold data page of the virtual machine are modified to accelerate the virtual machine migration process and improve migration efficiency. When the total capacity of dirty pages is greater than the network bandwidth, the hardware reset flags of the hot data page and the cold data page of the virtual machine are not modified.

S705: The second handler modifies a hardware set flag of the hot data page of the virtual machine to a third value, and modifies a hardware set flag of the cold data page of the virtual machine to a fourth value. The third value indicates that the processor is able to modify a write permission bit, and the fourth value indicates that the processor is unable to modify a write permission bit.

S706: The virtual machine is trapped when performing a write operation on the cold data page, and the second handler is indicated to reset a write permission bit of the cold data page.

S707: The second handler modifies the write permission bit of the cold data page to the second value, and updates the dirty page bitmap.

S708: The first handler determines a dirty page of the virtual machine based on the dirty page bitmap, and indicates the second handler to modify a write permission bit of the dirty page of the virtual machine to a first value.

S709: The first handler migrates the dirty page of the virtual machine.

In this embodiment, for specific descriptions of S705 to S709, refer to the descriptions of S404 to S408 in the embodiment shown in FIG. 4 respectively. Details are not described herein again.

Based on the method embodiments shown in FIG. 2, FIG. 4, and FIG. 7, an embodiment of this application further provides a virtual machine migration apparatus.

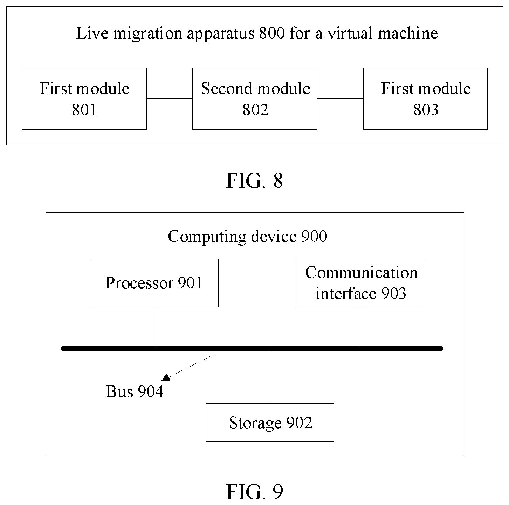

FIG. 8 is a diagram of a structure of a virtual machine migration apparatus 800 according to an embodiment of this application. The virtual machine migration apparatus 800 is configured to perform specific steps of the method embodiment shown in FIG. 2, FIG. 4, or FIG. 7.

As shown in FIG. 8, the virtual machine migration apparatus 800 includes a first module 801, a second module 802, and a third module 803.

The first module is configured to: when a virtual machine performs a write operation on a first data page, modify a write permission bit of the first data page to a second value, where the second value indicates that the first data page is writable.

The second module is configured to update a dirty page bitmap of the virtual machine based on the write permission bit of the first data page.

The third module is configured to migrate a dirty page of the virtual machine based on the dirty page bitmap. Specifically, the third module may determine the dirty page of the virtual machine that is marked in the dirty page bitmap, indicate the second module to modify a write permission bit of the dirty page of the virtual machine to a first value, and migrate the dirty page of the virtual machine, where the dirty page of the virtual machine includes the first data page.

It should be noted that, when the virtual machine migration apparatus 800 provided in the embodiment shown in FIG. 8 performs a live migration method for a virtual machine, division into the foregoing functional modules is merely used as an example for description. During actual application, the foregoing functions may be allocated to different functional modules for implementation according to a requirement. To be specific, an internal structure of a device is divided into different functional modules to implement all or some of the functions described above. In addition, when the virtual machine migration apparatus 800 provided in the foregoing embodiment performs specific steps of the method embodiment shown in FIG. 2, FIG. 4, or FIG. 7, the virtual machine migration apparatus 800 and the method embodiment shown in FIG. 2, FIG. 4, or FIG. 7 belong to a same concept. For a specific implementation process, refer to the method embodiment. Details are not described herein again.

FIG. 9 is a diagram of a hardware structure of a computing device 900 according to an embodiment of this application.

The computing device 900 may be the host machine shown in FIG. 1. As shown in FIG. 9, the computing device 900 includes a processor 901, a storage 902, a communication interface 903, and a bus 904. The processor 901, the storage 902, and the communication interface 903 are connected to each other through the bus 904. The processor 901, the storage 902, and the communication interface 903 may alternatively be connected in a connection manner other than the bus 904.

The storage 902 may be various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a hard disk drive. When the storage 902 is a memory, the storage 902 is configured to store a data page of a virtual machine and a page table corresponding to the virtual machine. The page table corresponding to the virtual machine includes a page table entry corresponding to each data page of the virtual machine.

The processor 901 has the foregoing hardware set function, and is configured to modify a write permission bit in a page table entry of a data page. In addition, a first handler and a second handler are run in the processor 901. The first handler may include the foregoing QEMU, and the second handler may include the foregoing KVM. Specifically, the processor 901 may be a general-purpose processor. The general-purpose processor may be a processor that performs a specific step and/or a specific operation by reading and executing content stored in a storage (for example, the storage 902). For example, the general-purpose processor may be a central processing unit (central processing unit, CPU). The processor 901 may include at least one circuit, to perform all or some of the steps of the live migration method for a virtual machine provided in the embodiment shown in FIG. 2, FIG. 4, or FIG. 7.

The communication interface 903 include: an interface for implementing interconnection between components in the computing device 900, for example, an input/output (input/output, I/O) interface, a physical interface, or a logical interface; and an interface for implementing interconnection between the computing device 900 and another device (for example, another computing device or user equipment). The physical interface may be an Ethernet interface, an optical fiber interface, an ATM interface, or the like.

The bus 904 may be any type of communication bus for implementing interconnection between the processor 901, the storage 902, and the communication interface 903, for example, a system bus.

The foregoing components may be separately disposed on chips that are independent of each other, or at least some or all of the components may be disposed on a same chip. Whether the components are separately disposed on different chips or integrated and disposed on one or more chips usually depends on a requirement of a product design. Specific implementation forms of the foregoing components are not limited in this embodiment of this application.

The computing device 900 shown in FIG. 9 is merely an example. During implementation, the computing device 900 may further include other components, which are not listed one by one in this specification.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer program instructions are loaded and executed on a computer, all or some of the processes or the functions according to embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It can be understood that various numbers in embodiments of this application are merely intended for differentiation for ease of description, but not to limit the scope of embodiments of this application. It should be understood that, in embodiments of this application, sequence numbers of the foregoing processes do not mean an execution sequence. The execution sequence of the processes should be determined based on functions and internal logic of the processes, and should not be construed as any limitation on implementation processes of embodiments of this application.

In the foregoing specific implementations, the objectives, technical solutions, and beneficial effects of this application are further described in detail. It should be understood that the foregoing descriptions are merely specific implementations of the present invention, but are not intended to limit the protection scope of this application. Any modification, equivalent replacement, improvement, or the like made based on the technical solutions of this application shall fall within the protection scope of this application.

## Claims

1. A live migration method for a virtual machine, applied to a host machine, wherein a virtual machine, a first handler, and a second handler are run in a processor of the host machine, the host machine stores write permission bits of a plurality of data pages of the virtual machine, a hardware set function for the write permission bits is currently set in the processor, the plurality of data pages comprise a first data page, a write permission bit of the first data page is currently a first value, the first value indicates that the first data page is non-writable, and the method comprises:
when the virtual machine performs a write operation on the first data page, modifying, by the processor, the write permission bit of the first data page to a second value, wherein the second value indicates that the first data page is writable;
updating, by the second handler, a dirty page bitmap of the virtual machine based on the write permission bit of the first data page; and
migrating, by the first handler, a dirty page of the virtual machine based on the dirty page bitmap, wherein the dirty page of the virtual machine comprises the first data page.

2. The method according to claim 1, wherein before the virtual machine performs the write operation on the first data page, the method further comprises:
determining, by the second handler, a hot data page and a cold data page among the plurality of data pages; and
modifying, by the second handler, a hardware set flag of the hot data page to a third value, and/or modifying a hardware set flag of the cold data page to a fourth value, wherein the third value indicates that the processor is able to modify a write permission bit, the fourth value indicates that the processor is unable to modify a write permission bit, and the hot data page comprises the first data page.

3. The method according to claim 2, wherein the method further comprises:
when the virtual machine is trapped when performing a write operation on a second data page, modifying, by the second handler, a write permission bit of the second data page to the second value, and updating the dirty page bitmap, wherein the cold data page comprises the second data page.

4. The method according to claim 2 or 3, wherein determining, by the second handler, the hot data page and the cold data page among the plurality of data pages comprises:
updating, by the second handler, activity of the plurality of data pages based on the dirty page bitmap; and
determining, by the second handler, the hot data page and the cold data page based on the activity of the plurality of data pages.

5. The method according to claim 4, wherein determining, by the second handler, the hot data page and the cold data page based on the activity of the plurality of data pages comprises:
updating, by the second handler based on the activity of the plurality of data pages, a hot page pool corresponding to the virtual machine, wherein the hot page pool is used to record the hot data page; and
determining, by the second handler, that a data page among the plurality of data pages other than the hot data page recorded in the hot page pool is the cold data page.

6. The method according to claim 4 or 5, wherein updating, by the second handler, the activity of the plurality of data pages based on the dirty page bitmap comprises:
determining, based on the dirty page bitmap, whether a target data page is a dirty page, wherein the plurality of data pages comprise the target data page; and
when the target data page is a dirty page, if activity of the target data page is not maximum activity, modifying the activity of the target data page to the maximum activity; or if activity of the target data page is maximum activity, skipping modifying the activity of the target data page; or
when the target data page is not a dirty page, if activity of the target data page is not minimum activity, reducing the activity of the target data page; or if activity of the target data page is minimum activity, skipping modifying the activity of the target data page.

7. The method according to claim 5 or 6, wherein updating, by the second handler based on the activity of the plurality of data pages, the hot page pool corresponding to the virtual machine comprises:
determining whether the hot page pool comprises the target data page; and
when the hot page pool does not comprise the target data page, if a quantity of hot data pages recorded in the hot page pool is less than a target threshold, adding the target data page to the hot page pool; or if a quantity of hot data pages recorded in the hot page pool is greater than or equal to the target threshold, deleting a third data page from the hot page pool, and adding the target data page to the hot page pool, wherein activity of the third data page is less than activity of a data page in the hot page pool other than the third data page.

8. The method according to any one of claims 1 to 7, wherein before updating, by the second handler, the dirty page bitmap of the virtual machine based on the write permission bit of the first data page, the method further comprises:
reading, by the second handler, a page table entry of the first data page from the memory by using a hardware vector acceleration instruction, wherein the page table entry of the first data page comprises the write permission bit of the first data page.

9. A live migration apparatus for a virtual machine, used in a host machine, wherein the host machine comprises a processor, the host machine stores write permission bits of a plurality of data pages of the virtual machine, the plurality of data pages comprise a first data page, a write permission bit of the first data page is currently a first value, the first value indicates that the first data page is non-writable, and the apparatus comprises:
a first module, configured to: when the virtual machine performs a write operation on the first data page, modify the write permission bit of the first data page to a second value, wherein the second value indicates that the first data page is writable;
a second module, configured to update a dirty page bitmap of the virtual machine based on the write permission bit of the first data page; and
a third module, configured to migrate a dirty page of the virtual machine based on the dirty page bitmap, wherein the dirty page of the virtual machine comprises the first data page.

10. The apparatus according to claim 9, wherein before the virtual machine performs the write operation on the first data page, the second module is further configured to:
determine a hot data page and a cold data page among the plurality of data pages; and
modify a hardware set flag of the hot data page to a third value, and/or modify a hardware set flag of the cold data page to a fourth value, wherein the third value indicates that the processor is able to modify a write permission bit, the fourth value indicates that the processor is unable to modify a write permission bit, and the hot data page comprises the first data page.

11. The apparatus according to claim 10, wherein when the virtual machine is trapped when performing a write operation on a second data page, the second module is configured to:
modify a write permission bit of the second data page to the second value, and update the dirty page bitmap, wherein the cold data page comprises the second data page.

12. The apparatus according to claim 10 or 11, wherein the second module is specifically configured to:
update activity of the plurality of data pages based on the dirty page bitmap; and
determine the hot data page and the cold data page based on the activity of the plurality of data pages.

13. The apparatus according to claim 12, wherein the second module is specifically configured to:
update, based on the activity of the plurality of data pages, a hot page pool corresponding to the virtual machine, wherein the hot page pool is used to record the hot data page; and
determine that a data page among the plurality of data pages other than the hot data page recorded in the hot page pool is the cold data page.

14. The apparatus according to claim 12 or 13, wherein the second module is specifically configured to:
determine, based on the dirty page bitmap, whether a target data page is a dirty page, wherein the plurality of data pages comprise the target data page; and
when the target data page is a dirty page, if activity of the target data page is not maximum activity, modify the activity of the target data page to the maximum activity; or if activity of the target data page is maximum activity, skip modifying the activity of the target data page; or
when the target data page is not a dirty page, if activity of the target data page is not minimum activity, reduce the activity of the target data page; or if activity of the target data page is minimum activity, skip modifying the activity of the target data page.

15. The apparatus according to claim 13 or 14, wherein the second module is specifically configured to:
determine whether the hot page pool comprises the target data page; and
when the hot page pool does not comprise the target data page, if a quantity of hot data pages recorded in the hot page pool is less than a target threshold, add the target data page to the hot page pool; or if a quantity of hot data pages recorded in the hot page pool is greater than or equal to the target threshold, delete a third data page from the hot page pool, and add the target data page to the hot page pool, wherein activity of the third data page is less than activity of a data page in the hot page pool other than the third data page.

16. The apparatus according to any one of claims 9 to 15, wherein before updating the dirty page bitmap of the virtual machine based on the write permission bit of the first data page, the second module is further configured to:
read a page table entry of the first data page from the memory by using a hardware vector acceleration instruction, wherein the page table entry of the first data page comprises the write permission bit of the first data page.

17. A server, wherein the server comprises a processor and a memory, and the processor is configured to execute a computer program in the memory to implement the method according to any one of claims 1 to 8.

18. A computing device, wherein the computing device comprises a processor and a memory, and the processor is configured to execute a computer program stored in the memory to implement the method according to any one of claims 1 to 8.

19. A computer-readable storage medium, comprising instructions, wherein when the instructions are run on a computer, the computer is enabled to perform the method according to any one of claims 1 to 8.

20. A computer program product, comprising instructions, wherein when the instructions are run on a computer, the computer is enabled to perform the method according to any one of claims 1 to 8.
